# EUROPÄISCHE PATENTSCHRIFT

(11) **EP 2 340 530 B1**
(45) Veröffentlichungstag und Bekanntmachung des Hinweises auf die Patenterteilung: **06.03.2013**
(21) Anmeldenummer: 09778708.9
(22) Anmeldetag: 24.09.2009
(51) Int. Cl.: G08B 25/01, G08B 29/12, H04M 1/247, H04M 11/04, H04M 1/725, H01M 10/48

(54) **VERFAHREN UND ANORDNUNG ZUM BETREIBEN EINER MOBILEN BATTERIEBETRIEBENEN PERSONENNOTSIGNALEINRICHTUNG**
METHOD AND ARRANGEMENT FOR OPERATING A MOBILE BATTERY-OPERATED PERSONAL EMERGENCY SIGNAL DEVICE
PROCÉDÉ ET DISPOSITIF PERMETTANT DE FAIRE FONCTIONNER UN DISPOSITIF MOBILE, ACTIONNÉ PAR BATTERIE, À SIGNAL DE SECOURS POUR PERSONNES

(30) Priorität: 30.09.2008 DE 102008049721
(43) Veröffentlichungstag der Anmeldung: 06.07.2011
(73) Patentinhaber: Siemens Enterprise Communications GmbH & Co. KG, 81379 München (DE)
(72) Erfinder: AHRENS, Werner, 33106 Paderborn (DE); BILKE, Volkmar, 33154 Salzkotten (DE)
(74) Vertreter: Fritzsche, Thomas
(86) Internationale Anmeldenummer: PCT/EP2009/006915
(87) Internationale Veröffentlichungsnummer: WO 2010/037502

(56) Entgegenhaltungen:
- EP-A- 1 804 069
- US-A1- 2002 086 718
- US-B1- 6 449 726

## Beschreibung

Die Erfindung betrifft ein Verfahren zum Betreiben einer mobilen batteriebetriebenen Personennotsignaleinrichtung gemäß dem Oberbegriff des Anspruchs 1 sowie eine Anordnung zum Betreiben einer mobilen batteriebetriebenen Personennotsignal-einrichtung gemäß dem Oberbegriff des Anspruchs 11.

Der Einsatz von Personennotsignalanlagen (PNA) zur Gewährleistung von schneller Hilfe, insbesondere bei kranken und gebrechlichen Personen, ist hinreichend bekannt. Bei derartigen Systemen werden in der Regel einer betreuten Person ein so genanntes Personennotsignalgerät (PNG) zur Verfügung gestellt, welches sich in der Regel bei Inbetriebnahme bzw. im Einsatz an eine, im Allgemeinen auch für den Empfang der Notsignale zuständige, Personennotsignalempfangszentrale (PNEZ) im Rahmen einer Funkübertragung anmeldet und in regelmäßigen Abständen, kontinuierlich und/oder im Bedarfsfall Verbindung aufnimmt.

Da es sich um Geräte handelt, die mit der betreuten Person mitgeführt werden müssen, handelt es sich bei Personennotsignaleinrichtungen um mobile Geräte.

EP1804069 beschreibt ein Überprüfungsverfahren der Ladung von batteriebetriebenen mobilen Geräte.

Nachteilig hierbei ist, dass diese mobilen Geräte eine durch die sie versorgende Batterie begrenzte Betriebsdauer hat.

Die Aufgabe der Erfindung ist es, ein Verfahren und eine Anordnung anzugeben, die es ermöglichen, stets die maximal mögliche Betriebsdauer im mobilen Einsatz der Personennotsignaleinrichtung zu gewähren.

Bei dem erfindungsgemäßen Verfahren zum Betreiben einer mobilen batteriebetriebenen Personennotsignaleinrichtung erfolgt zumindest im Rahmen einer Initiierung der Personennotsignal-einrichtung eine Überprüfung der Ladung einer die Personennotsignaleinrichtung speisenden Batterie, wobei abhängig vom Ergebnis der Überprüfung der Betrieb der Personennotsignaleinrichtung seitens einer zentralen Einrichtung zugelassen wird.

Durch die Erfindung wird vermieden, dass Personennotsignaleinrichtungen mit einer nicht für die übliche Betriebsdauer ausreichenden Batterieladung, für welche in der Regel acht Stunden als Mindestlaufzeit gefordert werden, in Betrieb genommen werden. Ein weiterer Vorteil des erfindungsgemäßen Verfahrens liegt darin, dass es aufgrund der Durchführung zumindest während einer Initialisierung in eine Funktionsprüfung integriert werden kann, welche in der Regel vom Benutzer abverlangt wird und bei der die Funktion verschiedener Alarmarten überprüft wird. Dabei erfolgt eine Verweigerung der Inbetriebnahme, falls Teile der Alarmarten nicht funktionieren. Als weiterer Vorteil kann die erfindungsgemäße Aufgabe also auch in diesen Prozess integriert werden, so dass Änderungen vorhandener Geräte minimiert werden und auch für einen Benutzer kaum Mehraufwand erforderlich ist und er sich sogar aufgrund der Erfindung ohne selbst den Ladezustand, beispielsweise durch Sichtkontrolle einer Ladeanzeige, prüfen zu müssen, darauf verlassen kann, dass dieser für einen Betrieb genügt.

Vorzugsweise wird die Überprüfung seitens der Personennotsignaleinrichtung durchgeführt, da dies eine sehr einfache Implementierung des erfinderischen Verfahrens ermöglicht, weil die Einrichtung hierzu lediglich lokal vorhandene elektrische Signale abfragen muss.

Bevorzugt wird bei einer weiteren vorteilhaften Weiterbildung nach erfolgter Überprüfung der zentralen Einrichtung zumindest eine zur Betriebsfähigkeit der Personennotsignaleinrichtung korrelierende Information übermittelt. Hierdurch ist gewährleistet, dass an die Personennotsignalanlage steuernder Stelle, weitere Schritte veranlasst werden können.

Bei einer alternativen Weiterbildung der Erfindung wird die Überprüfung seitens der zentralen Einrichtung durchgeführt. Hierdurch entlastet man die Personennotsignaleinrichtungen von zusätzlichen Prozeduren, die mehr Leistung benötigen und somit einen schnelleren Verbrauch der Batterie verursachen würden.

Als bevorzugte ergänzende Weiterbildung wird der zentralen Einrichtung im Rahmen der Initiierung zumindest eine einen Batteriezustand kennzeichnende Information übermittelt, so dass die zentrale Einrichtung dies unmittelbar auswerten kann.

Vorzugsweise wird dabei die Überprüfung als Teil einer im Rahmen der Initiierung erfolgenden Registrierung der Personennotsignaleinrichtung durchgeführt, da sich die bereits erwähnte einfache Implementierung ohne viel Anpassungsaufwand besonders geeignet realisieren kann.

Wird die Initiierung durch ein Einschalten der Personennotsignaleinrichtung und/oder ein Entfernen der Personennotsignaleinrichtung aus einer Vorrichtung zum Aufladen der Batterie ausgelöst, wird eine Lösung geboten, bei der der letztmögliche Zeitpunkt für die Überprüfung erfasst wird, da das Herausnehmen ein Indiz für eine geplante Mitführung ist.

Dies wird vorteilhaft dadurch weitergebildet, dass bei Auslösen der Initiierung durch Einschalten, nach Entfernen aus der Vorrichtung zum Aufladen der Batterie die Überprüfung nicht mehr erfolgt.

Alternativ oder ergänzend kann das erfindungsgemäße Verfahren derart weitergebildet werden, dass die Überprüfung nach erfolgter Initiierung in periodischen Abständen wiederholt wird. Hierdurch wird ein hohes Maß an Aktualität der erfassten Zustände gewährleistet. Ferner werden hierdurch auch überdurchschnittlich schnelle Entladungen festgestellt, die die ursprünglich ermittelte Betriebszeit verkürzen. Somit können auch unvorhergesehene Verkürzungen der Betriebszeit erfasst und entsprechende Schritte, beispielsweise die Ausgabe von Signalen an der Personennotsignaleinrichtung zur Aufforderung des Aufsuchens einer Ladestation, einleiten.

Vorzugsweise wird der Betrieb nur dann zugelassen, wenn die Überprüfung ergibt, dass die Ladung zumindest einen ersten Wert aufweist, so dass beispielsweise werkseitig vorgegebene Maximalwerte der Entladungszeit oder seitens der Personennotsignalanlage vorgegebene Mindestwerte der Entladungszeit eingehalten werden können.

Die erfindungsgemäße Anordnung zum Betreiben einer mobilen batteriebetriebenen Personennotsignaleinrichtung zeichnet sich durch Mittel zur Durchführung des Verfahrens bzw. einer der Weiterbildungen aus und leistet somit den vorteilhaften Beitrag eine Implementierung zu bieten, die die Vorteile des Verfahrens verwirklicht.

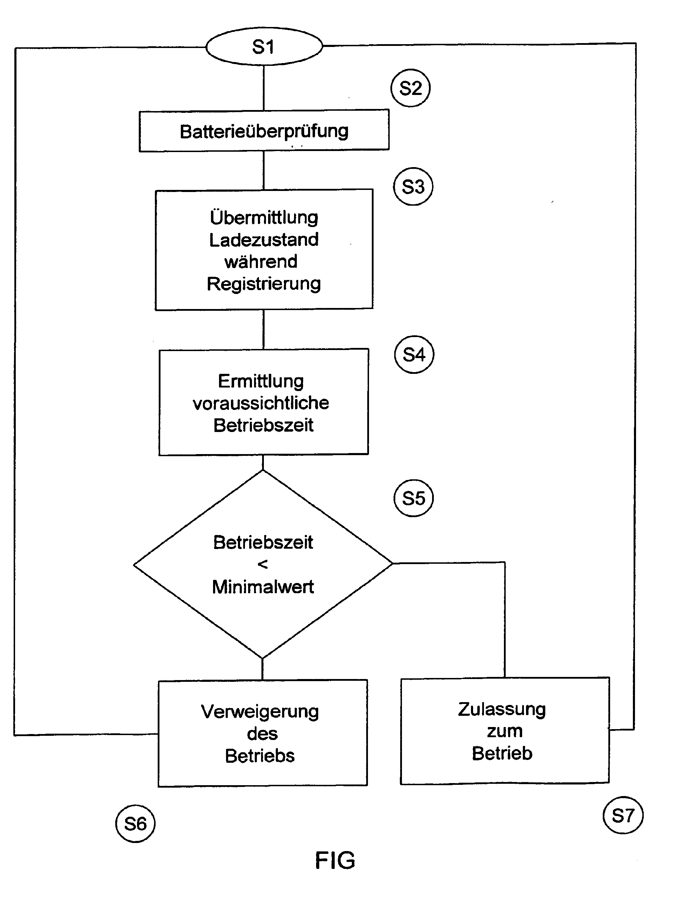

Weitere Vorteile sowie Details der Erfindung werden anhand eines in der einzigen Figur dargestellten Ausführungsbeispiels der Erfindung nachfolgend näher erläutert. Dabei zeigt die

Figur schematisch ein Ablaufdiagramm eines Ausführungsbeispiels des erfindungsgemäßen Verfahrens

In der Figur ist eine mögliche Implementierung des Verfahrens durch ein Ablaufdiagramm dargestellt, welches sowohl Schritte einer nach dem erfindungsgemäßen Verfahren funktionierenden Personennotsignaleinrichtung (PNG) als auch Schritte einer nach dem erfindungsgemäßen Verfahren funktionierenden Personennotsignalempfangszentrale (PNEZ) umfasst. Nach dem Einschalten des PNG erfolgt automatisch eine Registrierung des Gerätes in der Personen-Notsignal-Empfangs-Zentrale (PNEZ), da diese Einrichtungen erfindungsgemäß zusammen wirken.

Die jeweiligen dieses Zusammenwirken realisierenden Teilprozesse können dabei unterbrechungsgesteuert als Hintergrundprozesse auf den genannten Einrichtungen ablaufen und getriggert durch entsprechend vorgesehene Ereignisse, wie beispielsweise dem Einschalten des PNG oder dem Herausnehmen des PNG aus einer Ladeschale aktiviert werden.

Als ein erster Schritt S1 ist daher dieser Zustand des Ablaufs im Hintergrund bezeichnet, aus dem nach Aktivieren durch eines der genannten Ereignisse zu einem zweiten Schritt S2 übergegangen wird bei dem eine Überprüfung des Ladungszustands erfolgt. Es sei dabei angenommen, dass dies im PNG durchgeführt wird.

Diese Überprüfung liefert zumindest einen Wert, der in der Regel eine elektrische Größe sein wird, die zu einer voraussichtlich möglichen Betriebszeit des Gerätes korreliert, diese aber noch nicht unmittelbar angibt.

Daher wird in einem dritten Schritt S3 die Registrierung des PNG an der PNEZ durchgeführt. Bestandteil dieser Registrierung ist dabei die Übermittlung des Ladezustandes der Batterie. Eine derartige Registrierung kann beispielsweise ebenfalls die Folge eines der oben genannten Triggerereignisse sein.

Aus dem Ladezustand ermittelt in einem vierten Schritt S4 die PNEZ die voraussichtliche Betriebsdauer des PNG.

In einem fünften Schritt S5 erfolgt daraufhin ein Vergleich des ermittelten Wertes mit einem Vergleichswert.

Dieser Vergleichswert kann dabei eine bei voller Aufladung maximal mögliche Betriebsdauer oder wie im gezeigten Ausführungsbeispiel eine, insbesondere einstellbare, Mindestbetriebsdauer, die unter der maximal möglichen Betriebsdauer liegt, sein. Liegt nun der ermittelte Wert unter dem Vergleichswert, wird in einem sechsten Schritt S6 der Betrieb der PNG verweigert. Hierbei kann dieser Schritt durch einen nicht dargestellten Schritt ergänzt werden, bei dem der Benutzer einen Warnhinweis, beispielsweise eine Displaynachricht und/oder eine akustische Warnung, erhält.

Ergibt jedoch das Ergebnis des Vergleichs, dass der Ladezustand die geforderte Betriebsdauer gewährleistet, so wird in einem siebten Schritt S7 das PNG zum Betrieb zugelassen, wobei im Laufe des Betriebs bei einer Variante der Erfindung die Überprüfung beispielsweise in regelmäßigen Abständen erfolgt.

Wird von dem PNG eine Inbetriebnahmeprozedur und/oder eine Funktionsprüfung in der PNEZ gestartet, kann ebenfalls eine automatische Meldung des Batteriezustandes des PNG an die PNEZ erfolgen. Eine Zulassung des PNG durch die PNEZ zum Betrieb erfolgt nur nach einer positiven Überprüfung des Ladezustandes der Batterie, wobei hierbei noch angemerkt sei, dass in der Regel dies auch noch in der Regel mit einer erfolgreichen Überprüfung der Alarmsensoren des PNG durch die PNEZ zusammen erfüllt sein muss, für die Erfindung ist aber als Mindestbedingung die Prüfung des Ladezustands vorgesehen. Weitere Prüfungen sind nicht unbedingt erforderlich, können aber sofern sie ohnehin durchgeführt werden, als Rahmen für das Unterbringen der erfindungsgemäßen Prozedur von Nutzen sein.

Erfolgt während der der Inbetriebnahme des PNG sich anschließenden Überwachung durch die PNEZ eine Nachladung des PNG, beispielsweise bei Aufbewahrung des PNG in einer Ladeschale während einer Pause, wird nach dem Entnehmen aus der Ladeschale keine Überprüfung des Ladezustandes durchgeführt, da ja die Zulassung zum Betrieb schon gewährt worden ist und das Aufbewahren in der Ladeschale ja nicht zur Verminderung, sondern sogar noch zur Erhöhung der (Mindest)Ladung geführt hat.

Durch die automatische Überprüfung des Batteriezustandes beim Starten einer Inbetriebnahmeprozedur und/oder einer Funktionsprüfung des PNG wird ebenfalls sichergestellt, dass die Stromversorgung des PNG für die Nutzungsdauer ausreichend ist.

Das dargestellte Verfahren und die hier beschriebenen teilweise nicht dargestellten Alternativen haben jedoch alle gemein, dass Funktionssicherheit und damit die Alarmfunktion im Notfall des PNG deutlich erhöht wird und der Benutzer von Kontrollaufgaben entlastet wird.

## Patentansprüche

1. Verfahren zum Betreiben einer mobilen batteriebetriebenen Personennotsignaleinrichtung, **dadurch gekennzeichnet, dass**
a. zumindest im Rahmen einer Initiierung der Personennotsignaleinrichtung eine Überprüfung der Ladung einer die Personennotsignaleinrichtung speisenden Batterie erfolgt,
b. abhängig vom Ergebnis der Überprüfung der Betrieb der Personennotsignaleinrichtung seitens einer zentralen Einrichtung zugelassen wird.

2. Verfahren nach Anspruch 1, **dadurch gekennzeichnet, dass** die Überprüfung seitens der Personennotsignaleinrichtung durchgeführt wird.

3. Verfahren nach dem vorhergehenden Anspruch, **dadurch gekennzeichnet, dass** nach erfolgter Überprüfung der zentralen Einrichtung zumindest eine zur Betriebsfähigkeit der Personennotsignaleinrichtung korrelierende Information übermittelt wird.

4. Verfahren nach Anspruch 1, **dadurch gekennzeichnet, dass** die Überprüfung seitens der zentralen Einrichtung durchgeführt wird.

5. Verfahren nach dem vorhergehenden Anspruch, **dadurch gekennzeichnet, dass** der zentralen Einrichtung im Rahmen der Initiierung zumindest eine einen Batteriezustand kennzeichnende Information übermittelt wird.

6. Verfahren nach dem vorhergehenden Anspruch, **dadurch gekennzeichnet, dass** die Überprüfung als Teil einer im Rahmen der Initiierung erfolgenden Registrierung der Personennotsignaleinrichtung durchgeführt wird.

7. Verfahren nach einem der vorhergehenden Ansprüche, **dadurch gekennzeichnet, dass** die Initiierung durch ein Einschalten der Personennotsignaleinrichtung und/oder ein Entfernen der Personennotsignaleinrichtung aus einer Vorrichtung zum Aufladen der Batterie ausgelöst wird.

8. Verfahren nach dem vorhergehenden Anspruch, **dadurch gekennzeichnet, dass** bei Auslösen der Initiierung durch Einschalten, nach Entfernen aus der Vorrichtung zum Aufladen der Batterie die Überprüfung nicht mehr erfolgt.

9. Verfahren einem der vorhergehenden Ansprüche, **dadurch gekennzeichnet, dass** die Überprüfung nach erfolgter Initiierung in periodischen Abständen wiederholt wird.

10. Verfahren nach dem vorhergehenden Anspruch, **dadurch gekennzeichnet, dass** der Betrieb zugelassen wird, wenn die Überprüfung ergibt, dass die Ladung zumindest einen ersten Wert aufweist.

11. Anordnung zum Betreiben einer mobilen batteriebetriebenen Personennotsignaleinrichtung, **gekennzeichnet durch** Mittel zur Durchführung des Verfahrens nach einem der vorhergehenden Ansprüche.

## Claims

1. Method for operating a mobile battery-operated personal emergency signal device, **characterised in that**
a. a check of the charge of a battery feeding the personal emergency signal device is performed at least in the course of initiating the personal emergency signal device,
b. the operation of the personal emergency signal device is permitted by a central device depending on the result of the check.

2. Method according to claim 1, **characterised in that** the check is performed by the personal emergency signal device.

3. Method according to any one of the preceding claims, **characterised in that** at least one piece of information correlating to the operability of the personal emergency signal device is transmitted after checking the central device.

4. Method according to claim 1, **characterised in that** the check is performed by the central device.

5. Method according to any one of the preceding claims, **characterised in that** at least one piece of information identifying the battery condition is transmitted to the central device in the course of initiation.

6. Method according to any one of the preceding claims, **characterised in that** the check is performed as part of a registration, performed in the course of initiation, of the personal emergency signal device.

7. Method according to any one of the preceding claims, **characterised in that** the initiation is triggered by switching on the personal emergency signal device and/or removing the personal emergency signal device from a device for charging the battery.

8. Method according to any one of the preceding claims, **characterised in that** the check no longer takes place when triggering the initiation by switching on, after removal from a device for charging the battery.

9. Method according to any one of the preceding claims, **characterised in that** the check is repeated periodically after initiation.

10. Method according to any one of the preceding claims, **characterised in that** the operation is permitted when the check reveals that the charge has at least one first value.

11. Arrangement for operating a mobile battery-operated personal emergency signal device, **characterised by** means for performing the method according to any one of the preceding claims.

## Revendications

1. Procédé servant à faire fonctionner un dispositif mobile, actionné par batteries, à signal de secours pour personnes, **caractérisé en ce**
a. **qu'**un contrôle de la charge d'une batterie alimentant le dispositif à signal de secours pour personnes est effectué au moins dans le cadre d'un amorçage dudit dispositif à signal de secours pour personnes,
b. **qu'**en fonction du résultat dudit contrôle, la mise en service du dispositif à signal de secours de personnes est autorisée du côté d'un dispositif central.

2. Procédé selon la revendication 1, **caractérisé en ce que** le contrôle est effectué du côté du dispositif à signal de secours pour personnes.

3. Procédé selon la revendication précédente, **caractérisé en ce qu'**est transmise après le contrôle réussi du dispositif central, au moins une information permettant d'établir une corrélation par rapport à l'aptitude au fonctionnement du dispositif à signal de secours pour personnes.

4. Procédé selon la revendication 1, **caractérisé en ce que** le contrôle est effectué du côté du dispositif central.

5. Procédé selon la revendication précédente, **caractérisé en ce qu'**au moins une information caractérisant un état de la batterie est transmise au dispositif central dans le cadre de l'amorçage.

6. Procédé selon la revendication précédente, **caractérisé en ce que** le contrôle est effectué comme une partie d'un enregistrement du dispositif à signal de secours pour personnes s'effectuant dans le cadre d'un amorçage.

7. Procédé selon l'une quelconque des revendications précédentes, **caractérisé en ce que** l'amorçage est déclenché par la mise en service du dispositif à signal de secours pour personnes et/ou par le retrait du dispositif à signal de secours pour personnes d'un dispositif servant à charger la batterie.

8. Procédé selon la revendication précédente, **caractérisé en ce que** le contrôle n'a plus lieu lors du déclenchement de l'amorçage par la mise en service, après le retrait hors du dispositif servant à charger la batterie.

9. Procédé selon l'une quelconque des revendications précédentes, **caractérisé en ce que** le contrôle est répété à intervalles périodiques après l'amorçage réussi.

10. Procédé selon la revendication précédente, **caractérisé en ce que** le fonctionnement est autorisé lorsqu'il résulte du contrôle que la charge présente au moins une première valeur.

11. Ensemble servant au fonctionnement d'un dispositif mobile à signal de secours pour personnes, **caractérisé par** des moyens servant à la mise en oeuvre du procédé selon l'une quelconque des revendications précédentes.
